# EUROPEAN PATENT SPECIFICATION

(11) **EP 1 872 039 B1**
(45) Date of publication and mention of the grant of the patent: **29.01.2014**
(21) Application number: 05735331.0
(22) Date of filing: 07.04.2005
(51) Int. Cl.: A62C 35/68, F16K 31/122, F16K 31/40, F16K 31/42

(54) **PNEUMATIC FLOW CONTROL VALVE FOR FIRE SUPPRESSION OVER PRESSURE PREVENTION**
DRUCKLUFTSTROMREGELVENTIL ZUR BRANDUNTERDRÜCKUNGSÜBERDRUCKVERHINDERUNG
VANNE PNEUMATIQUE DE COMMANDE D'ECOULEMENT POUR SUPPRESSION D'UN FEU SUR PREVENTION PAR PRESSION

(43) Date of publication of application: 02.01.2008
(73) Proprietor: Chubb International Holdings Limited, Sunbury-on-Thames TW16 7AR (GB)
(72) Inventor: SUN, Fanping, c/o CHUBB PROTECTION CORPORATION, Farmington, Connecticut 06034-4065 (US); CHAUDHRY, Zaffir, c/o CHUBB PROTECTION CORPORATION, Farmington, Connecticut 06034-4065 (US); LELIC, Muhidin A., CHUBB PROTECTION CORPORATION, Farmington, Connecticut 06034-4065 (US); PRILL, Lisa A., c/o CHUBB PROTECTION CORPORATION, Farmington, Connecticut 06034-4065 (US); VAIDYA, Umesh G., c/o CHUBB PROTECTION CORPORATION, Farmington, Connecticut 06034-4065 (US); MIJANOVIC, Stevo, c/o CHUBB PROTECTION CORPORATION, Farmington, Connecticut 06034-4065 (US); DOROBANTU, Mihai, c/o CHUBB PROTECTION CORPORATION, Farmington, Connecticut 06034-4065 (US)
(74) Representative: Chiva, Andrew Peter
(86) International application number: PCT/US2005/012791
(87) International publication number: WO 2006/110149

(56) References cited:
- EP-A1- 0 284 722
- EP-A1- 0 666 087
- US-A- 2 398 775
- US-A- 3 875 849
- US-A- 5 294 089
- US-A- 5 645 263

## Description

### BACKGROUND OF THE INVENTION

Hazard suppression systems have long been employed for protecting areas containing valuable equipment or components, such as art galleries, data centers, and computer rooms. Traditionally, these systems utilize Halon, which is ideal for hazard suppression because it is capable of very quickly suppressing a hazard, it can be stored at relatively low pressures, and only a relatively small quantity is required.

However, in recent years the adverse environmental effects of Halon on the ozone have become evident, and many governmental agencies have banned further use of Halon. In some countries, existing Halon systems are being replaced by other, more environmentally friendly inert gases such as nitrogen, argon, carbon dioxide, and mixtures thereof. Unlike the Halon-based fire suppression systems, inert gas-based systems use natural gases and do not contribute to atmospheric ozone depletion.

Combustion occurs when fuel, oxygen, and heat are present in sufficient amounts to support the ignition of flammable material. Inert gas fire suppression systems are based on reducing the level of oxygen in an enclosure to a level that will not sustain combustion. In order to extinguish a fire, inert gas stored in a large number of high-pressure cylinders is released into the enclosure to reduce the concentration of oxygen by displacing oxygen with the inert gas until combustion is extinguished. Typically, ambient air comprises 21% concentration by volume of oxygen. This concentration must be reduced to below 14% to effectively extinguish the fire. To reach this objective, a relatively large volume of gas must be released.

There are health and safety implications for facility personnel, particularly in relation to the reduction of oxygen in the atmosphere once the system is discharged. Careful calculation is required to ensure that the concentration of inert gas released is sufficient to control combustion, yet not so high as to pose a serious risk to personnel.

The replacement of Halon with inert gas for fire protection presents two issues with the system design. First, the delivery of a large amount of gas into a protected room within a short period time (fire codes in some countries require that the gas be delivered in less than one minute) may generate overpressure In the room which could potentially damage equipment in the room. Current industrial practice is to use a special, expensive vent in the room to prevent the overpressure. Second, unlike Halon, inert gas is stored under normal room temperature in gaseous form, rether than liquid form. To reduce the storage vessel volume, a very high pressure is preferred, typically around 300 bar (30 MPa). As a result, the gas distribution system must be capable of withstanding extremely high pressures. These two limitations are key factors in the cost of both new installation and retrofit.

The overpressure in the protected room is primarily caused by an uneven discharge of the inert gas from the pressure vessel. The pressure in the gas vessel decays exponentially during gas release, so the overpressure typically occurs in the first few seconds of the discharge. If the gas release can be throttled to a fairly uniform pressure profile over the duration of the discharge, overpressure in the protected room can be prevented while ensuring that the predetermined amount of inert gas is delivered within the required time.

Throttling the gas flow requires a valve with a controllable variable opening area. While this can be performed by a closed-loop servo valve, high initial and maintaining costs make it an unfavorable approach for fire protection. In addition, the increased system complexity of a closed-loop control can also introduce reliability concerns.

US 5294089 discloses a proportional flow valve in which inlet fluid pressure urges a valve member towards a valve seat.

### BRIEF SUMMARY OF THE INVENTION

The present invention provides a valve as claimed in claim 1.

### BRIEF DESCRIPTION OF THE DRAWINGS

FIG. 1 is a schematic representation of a fire-suppression system in accordance with the present invention.
FIG. 2 is a sectional view of a first embodiment of a pneumatic flow control valve in a closed position in accordance with the present invention.
FIG. 2A is a cross-sectional view of the first embodiment of the pneumatic flow control valve in the closed position in accordance with the present invention.
FIG. 3 is a sectional view of the first embodiment of the pneumatic flow control valve in an open position in accordance with the present invention.
FIG. 3A is a cross-sectional view of the first embodiment of the pneumatic flow control valve in the open position in accordance with the present invention.
FIG. 4 is a sectional view of the first embodiment of the pneumatic flow control valve in a charging position in accordance with the present invention.
FIG. 4A is a cross-sectional view of the first embodiment of the pneumatic flow control valve in the charging position in accordance with the present invention.
FIG. 5 is a graph comparing the rate of release of gas from a prior art flow control valve and the rate of release of gas from the pneumatic flow control valve in accordance with the present invention.
FIG. 6 is a graph of movement of a spool in accordance with the present invention as a function of time.
FIG. 6A is a graph of the forces on a spool of the pneumatic flow control valve of the present invention as a function of time as it moves from the closed position to the open position.
FIG. 7 is a sectional view of the second embodiment of the pneumatic flow control valve in an closed position, this embodiment not being part of the present invention.
FIG. 7A is a cross-sectional viewof the second embodiment of the pneumatic flow control valve in the closed position, this embodiment not being part of the present invention.
FIG. 8 is a sectional view of the second embodiment of the pneumatic flow control valve in an open position, this embodiment not being part of the present invention.
FIG. 8A is a cross-sectional view of the second embodiment of the pneumatic flow control valve in the open position, this embodiment not being part of the present invention.

### DETAILED DESCRIPTION

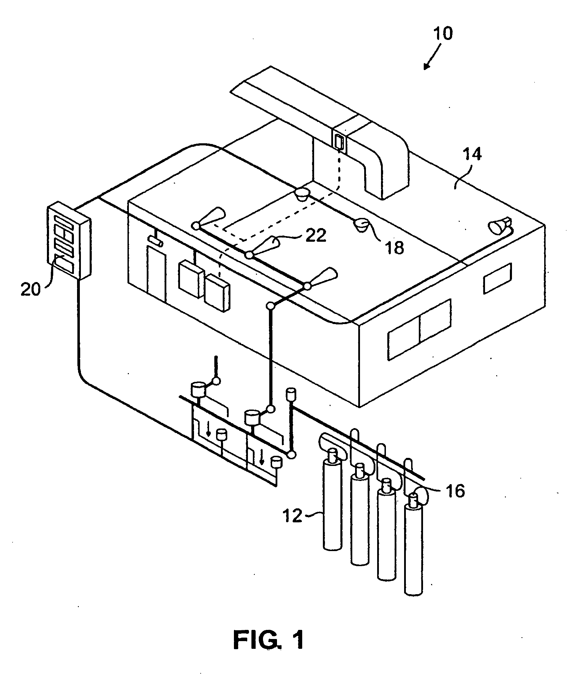

FIG. 1 is a schematic representation of an inert gas-based fire suppression system 10. A plurality of inert gas storage cylinders 12 are located in a storage area or room proximate an enclosed room 14 to be protected. Inert gas storage cylinders 12 contain inert gas to be released into protected room 14 in case of a fire or other hazard. Associated with each cylinder 12 is an open-loop pneumatic sliding flow control valve 16 for controllably releasing gas into protected room 14. When a fire is detected in protected room 14 by a fire detector 18 located in protected room 14, a control panel 20 opens flow control valves 16. Gas is then abruptly discharged into protected room 14 through discharge nozzles 22 to deplete the concentration of oxygen in protected room 14 and extinguish the fire.

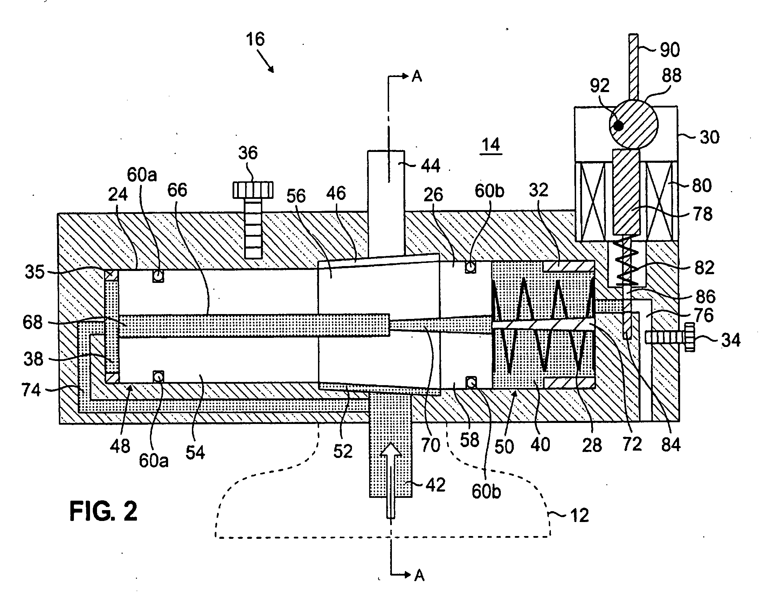

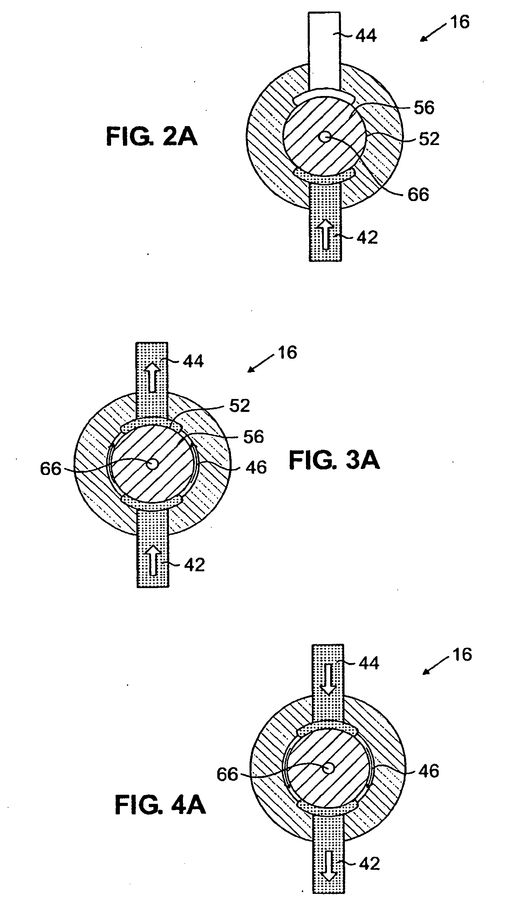

FIGS. 2-4 show sectional views of a first embodiment of flow control valve 16 in a fully closed position, a fully open position, and a recharging position, respectively. FIGS. 2A-4A show cross sectional views of flow control valve 16 at lines A-A when flow control valve 16 is closed, open, and recharging, respectively. FIG. 2 is a sectional view of flow control valve 16 in the fully closed position mounted on cylinder 12. Flow control valve 16 generally includes valve body 24, slidable spool 26, spring 28, solenoid pilot valve 30, ring stop 32, adjust screw 34, and stop screw 36. Flow control valve 16 throttles the release of inert gas from cylinder 12 in order to control the pressure discharge into protected room 14 (shown in FIG. 1).

Valve body 24 generally comprises spool 26, control pressure chamber 38, back pressure chamber 40, gas inlet 42, gas outlet 44, and primary flow passage 46. Valve body 24 has a first end 48, a second end 50, and a valve seat section 52 located between first and second ends 48 and 50. Spool 26 is housed in valve body 24 and is slidable between first end 48 and second end 50 of valve body 24. Valve body 24 and spool 26 form control pressure chamber 38 at first end 48 of valve body 24 and back pressure chamber 40 at second end 50 of valve body 24. Spool 26 is in a first (closed) is in a second (open) position relative to valve body 24 when spool 26 is proximate second end 50.

Spool 26 is sized to slidably engage valve body 24 and has a head portion 54, a conical mid-section 56, and a tail portion 58. Diameter D_{T} of tail 58 is largerthan diameter D_{H} of head 54. Diameter D_{C} of conical section 56 is larger than both diameters D_{H} of head 54 and D_{T} of tail 58 and increases in diameterfrom head 54 to tail 58. As shown in FIG. 2, when spool 26 is in the first position, conical section 56 sits in valve seat 52 of valve body 24. Because conical valve seat 52 has the same diameter D_{C} as conical section 56, when conical section 56 sits in valve seat 52, conical section 56 seals primary flow passage 46 located between gas inlet 42 and gas outlet 44 such that gas cannot pass through gas inlet 42 to gas outlet 44. Head 54 and tail 58 of spool 26 carry a plurality of O-rings 60 positioned at top and bottom sides 62 and 64 of head 54 and tail 58 such that O-rings 60 contact valve body 24 and seal any air passages between valve body 24 and spool 26. O-rings 60 ensure that gas does not escape from control pressure chamber 38 or back pressure chamber 40 through primary flow passage 46.

Internal flow restriction orifice 66 passes through the length of spool 26 and connects control pressure chamber 38 and back pressure chamber 40. A first portion 68 of internal orifice 66 having a diameter D_{O} passes through head 54 and a portion of conical section 56 of spool 26. A second portion 70 of internal orifice 66 having a variable diameter D_{V} passes through the remainder of conical section 56 and tail 58 of spool 26. Diameter D_{V} of second portion 70 is smaller than diameter D_{O} of first portion 68 where second portion 70 abuts first portion 68 and then gradually increases such that diameter D_{V} of second portion 70 is approximately equal to D_{O} of first portion 68 where second portion 70 is exposed to back pressure chamber 40.

In order to control the rate of gas entering back pressure chamber 40 from control pressure chamber 38 through internal orifice 66, a needle valve 72 extends from second end 50 of valve body 24. Needle valve 72 is positioned in back pressure chamber 40 and is sized to slidably engage second portion 70 of internal orifice 66 when spool 26 moves toward the second position. Needle valve 72 is a variable diameter needle valve and gradually decreases the rate of gas flowing from control pressure chamber 38 into back pressure chamber 40 as needle valve 72 slides further into internal orifice 66.

Control pressure chamber 38 is located at first end 48 of valve body 24. Both control pressure chamber 38 and first end 48 have a diameter D₁ sized to accept head 54. When spool 26 is in the first position, control pressure chamber 38 receives head 54 of spool 26 such that conical section 56 of spool 26 abuts first end 48 of valve body 24. Because diameter D_{C} of conical section 56 is larger than diameter D₁ of first end 48, first end 48 cannot accept conical section 56. Spool 26 is thus fully in the first position when conical section 56 abuts first end 48 and compresses spring 28 located in control pressure chamber 38. Spring 28 is a compression spring and resists compression when in a relaxed state. Gas passes from cylinder 12 to control pressure chamber 38 through control flow passage 74 when flow control valve 16 is activated.

Back pressure chamber 40 is located at second end 50 of valve body 24 and has a diameter D₂, which is slightly larger than diameter D₁ of first end 48. Diameter D₂ of back pressure chamber 40 is sized to accept tail 58. Ring stop 32 is located in back pressure chamber 40 and is positioned to engage 58 when spool 26 moves toward the second position. Back pressure chamber 40 is connected to cylinder 12 by bleed passage 76 and has the same pressure as cylinder 12 when spool 26 is in the first position.

Solenoid valve 30 is located adjacent back pressure chamber 40 and controls the release of gas from back pressure chamber 40 through bleed passage 76 connecting back pressure chamber 40 to the atmosphere. Solenoid valve 30 generally includes solenoid core 78, solenoid coils 80, spring 82, and needle valve 84 having a passage 86. Spring 82 biases solenoid core 78 towards a closed position. Needle valve 84 is connected to solenoid core 78 and is positioned relative to bleed passage 76. When solenoid valve 30 is closed, passage 86 of needle valve 84 is not aligned with bleed passage 76 and restricts gas from leaving back pressure chamber 40. Because gas cannot leave back pressure chamber 40, the combination of high initial pressure in back pressure chamber40, low initial pressure in control pressure chamber 38, and spring 28 keep primary flow passage 46 and flow control valve 16 closed. A cam 88 having a lever 90 and pivot point 92 are positioned to engage solenoid core 78 as a manual override if control panel 20 (shown in FIG. 1) or solenoid coil 78 are not functioning properly.

When spool 26 is in the first position, bleed passage 76 and back pressure chamber 40 are filled with inert gas from cylinder 12 and have the same pressure as cylinder 12 and valve body 24. Gas from cylinder 12 cannot pass through control flow passage 74 into control pressure chamber 38 because solenoid valve 30 is closed and bleed passage 76 is blocked. This differential pressure between the initial low pressure in control pressure chamber 38 and the initial high pressure in back pressure chamber40 urges spool 26 towards the first position. Spool 26 is also biased towards control pressure chamber 38 due to extended spring 28 and the slightly larger diameter D₂ of back pressure chamber 40. In this position, conical section 56 engages valve seat 52 and securely seals primary flow passage 46, maintaining flow control valve 16 in the closed position.

FIG. 2A is a cross-sectional view of flow control valve 16 in the closed position. As can be seen in FIG. 2A, the path of primary flow passage 46 is between valve seat 52 and conical section 56. When flow control valve 16 is in standby for fire protection, solenoid valve 3. is powered off and bleed passage 76 is closed. The pressure differential between control pressure chamber 38 and back pressure chamber40 keeps spool 26 in the first position with conical section 56 engaging valve seat 52 and sealing primary flow passage 46. As a result, gas cannot pass through primary flow passage 46 to gas outlet 44.

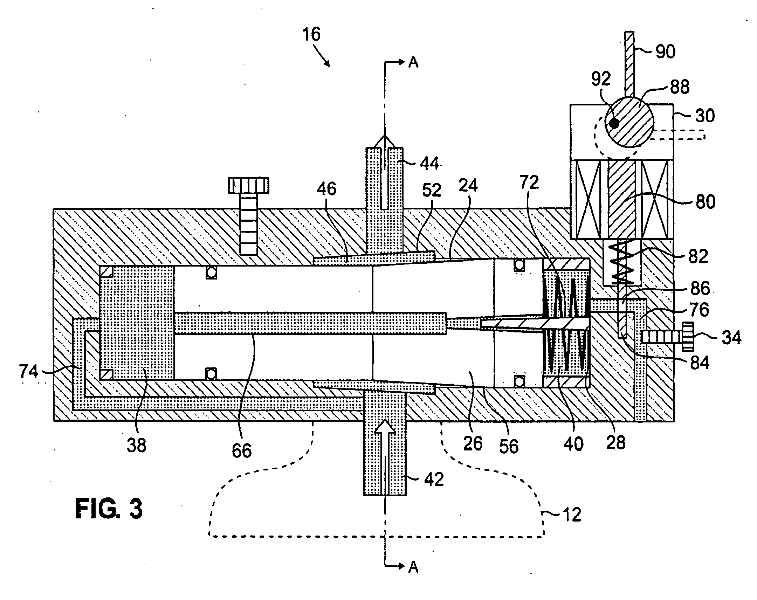

FIG. 3 is a sectional view of flow control valve 16 in the open position. When there is a need to discharge gas from cylinder 12, solenoid valve 30 is opened and gas is allowed to flow through control flow passage 74. Solenoid valve 30 is normally electrically activated by control panel 20 (shown in FIG. 1). In case of a powerfailure during a fire or other hazard, flow control valve 16 can also be opened manually by turning lever 88 at pivot point 90 by 90 degrees to activate cam 86 into contact with solenoid core 78. Solenoid core 78 is forced down and compresses spring 80 such that passage 84 of needle valve 82 is co-linear with control flow passage 74. Once control flow passage 74 is opened, the pneumatic pressures in activation chamber 38 and back pressure chamber 40 and the spring forces of spring 28 control the velocity of spool 26 and the rate of gas discharge.

The initial high pressure of back pressure chamber 40 provides a large force to break the stiction (or "binding" due to long term storage) of conical section 56 from valve seating 52. As gas flows through control flow passage 74 and into activation chamber 38, the pressure in cylinder 12 and valve body 24 attempts to equalize by gradually depleting pressure from back pressure chamber 40 through bleed passage 76. The combination of the spring restoring force of spring 28 and the pneumatic pressure between activation and back pressure chambers 38 and 40 overcomes the frictional force on spool 26 and ensures that flow control valve 16 opens. As flow control valve 16 approaches equilibrium, spool 26 gradually moves to the second position as (compression) spring 28 extends. While spool 26 is also urged towards back pressure chamber 40 due to the pneumatic pressure as pressure in activation chamber 38 and back pressure chamber 40 decay, it is primarily the spring restoring force of spring 28 that drives spool 26 towards the second position. The counterforce of the net pneumatic force generated by the difference in area of valve body 24 acts to slow down the velocity of spool 26 so that overpressure does not occur in protected room 14. Spool 26 is in the second position and stops moving when flange 62 of tail 60 engages ring stop 34 of valve body 24.

The cross-section of primary flow passage 46 is proportional to the displacement of spool 26, and flow control valve 16 opens from a minimal to a maximal area linearly when the displacement of spool 26 is a linear function of time. The rate of gas discharge can also be controlled by setting a plug screw 34 in bleed passage 76. The rate of pressure depletion in back pressure chamber 40 decreases as plug scrow 34 is screwed further into bleed passage 76 and the flow of gas from back pressure chamber 40 is inhibited. The rate of pressure depletion in back pressure chamber 40 increases as plug screw 34 is unscrewed from bleed passage 76 and the flow of gas from back pressure chamber 40 is increased.

As can be seen in FIG. 3A, when spool 26 moves from the first position to the second position, primary flow passage 46 is no longer restricted and gas from cylinder 12 can pass through primary flow passage 46 and discharge at gas outlet 44.

To better illustrate how valve seat 52 and conical section 56 interact to either close or open primary flow passage 36, FIGS. 2A and 3A are sectional views of flow control valve 16 in the closed and open positions, respectively. When flow control valve 16 is closed, conical section 56 sits securely In valve seat 52 such that gas cannot pass through primary flow passage 46 When spool 26 moves from the first position to the second position and flow control valve 16 opens, conical section 56 breaks from valve seat 52 and tail 60 of spool engages valve seat 52. Because diameter D_{C} of valve seat 52 is greater than the diameter D_{T} of tail 60, as spool 26 moves to the second position, the distance H between spool 26 and valve seat 52 gradually increases such that primary flow passage 46 gradually opens and gas is able to pass around spool 26.

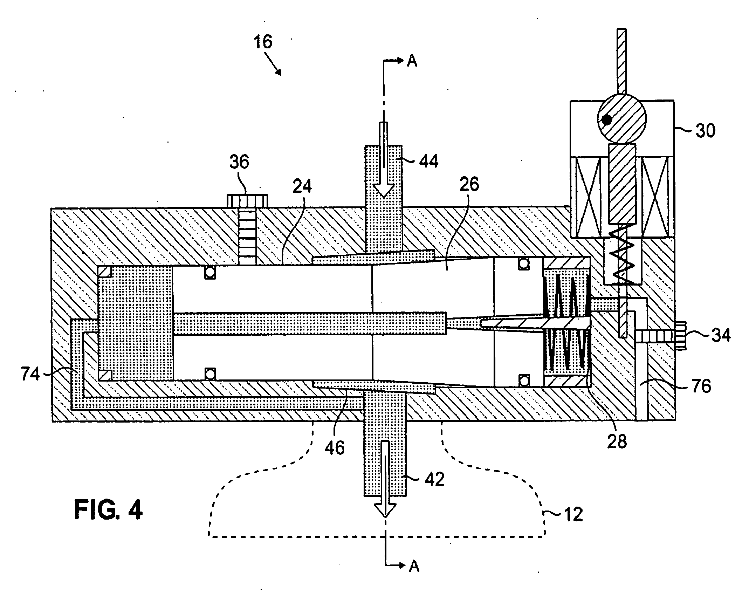

FIG. 4 shows flows control valve 16 after the gas in cylinder 12 has been discharged and flow control valve 16 needs to be recharged for subsequent use. After the inert gas has been released from cylinder 12 and flow control valve 16, spool 26 may be in an undefined position due to friction and spring biasing. As such, spool 26 needs to be properly positioned in valve body 24 priorto charging. This is done by first removing flow control valve 16 from cylinder 12. Gas outlet 42 is capped off, opening bleed passage 76, and pressuring flow control valve 16 at gas inlet 44 to move spool 26 to the second position and open primary flow passage 46.

Once spool 28 is properly positioned in valve body 24, valve body 24 can be charged to full pressure while mounted on cylinder 12. Stop screw 36 is first lowered into valve body 24 to secure spool 26 in position. Solenoid valve 30 is then closed to block control flow passage 72 and plug screw 34 fully inserted into bleed passage 76 so that gas cannot enter back pressure chamber 42. Gas is passed through gas outlet 42, which is used as an inlet during the charging process, until cylinder 12 and valve body 24 are full. Once cylinder 12 and valve body 24 are fully charged, stop screw 36 is manually lifted from valve body 24 and spool 26 returns to the first position under the spring loading of second spring and the unbalanced pneumatic force, closing primary flow passage 46.

FIG. 4A is a cross-sectional view of flow control valve 16 during the charging process. When flow control valve 16 is charging, primary flow passage 46 is open to allow gas to pass into valve body 24 and cylinder 12.

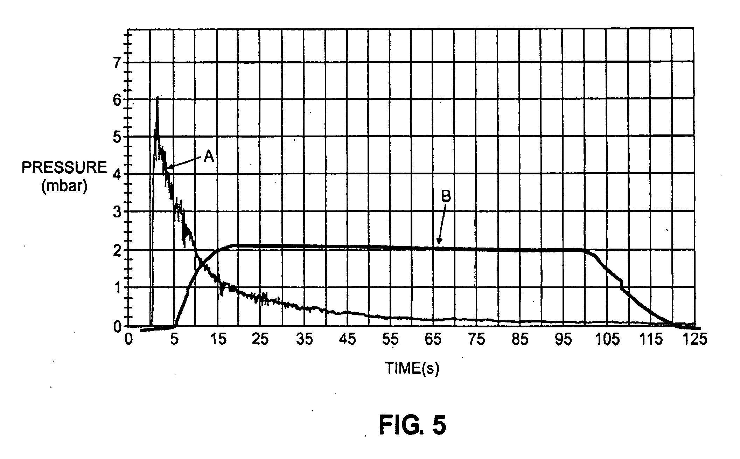

FIG. 5 is a graph of rate of release of gas A from a prior art flow control valve and rate of release of gas B from flow control valve 16. As can be seen in FIG. 5, prior art flow control valves release gas into an enclosed room at a dangerously high pressure in a very short period of time. This can pose a danger to any personnel and equipment in the enclosed room when the gas is released. By contrast, flow control valve 16 releases gas into the enclosed room at a controlled rate. The initial rate of release of gas gradually increases and generally levels off as flow control valve 16 opens. As the gas in flow control valve 16 is released and the level of gas remaining in flow control valve 16 decays, the differential pressure in activation and back pressure chambers 38 and 40 and the rate of gas release gradually decrease until there is a nominal amount of gas left in flow control valve 16 and no more gas is emitted.

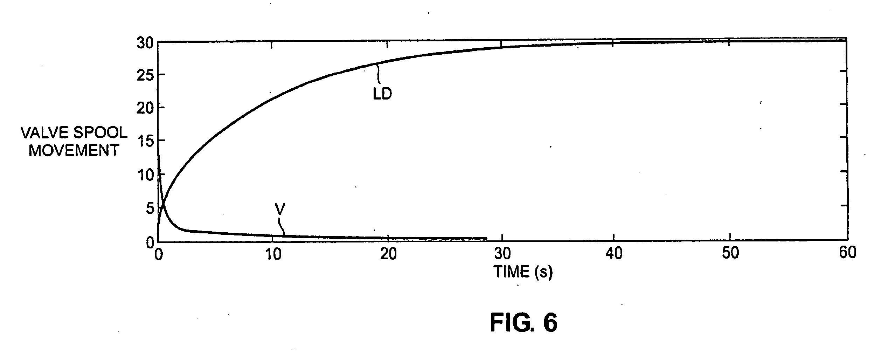

FIG. 6 is a graph showing linear displacement LD and velocity V of spool 26 as a function of time. As spool 26 moves from the first position to the second position, the displacement of spool 26 relative to the first position gradually increases as a function of time until flange 62 of tail 60 engages ring stop 32 of valve body 24 and flow control valve 16 is fully open. In contrast, the velocity of spool 26 decreases as a function of time. The initial velocity of spool 26 must be large enough for spool 26 to break from valve seat 52. After spool 26 is displaced from valve seat 52, the velocity of spool 26 gradually decreases until spool 26 is in the second position and cannot move any further in valve body 24.

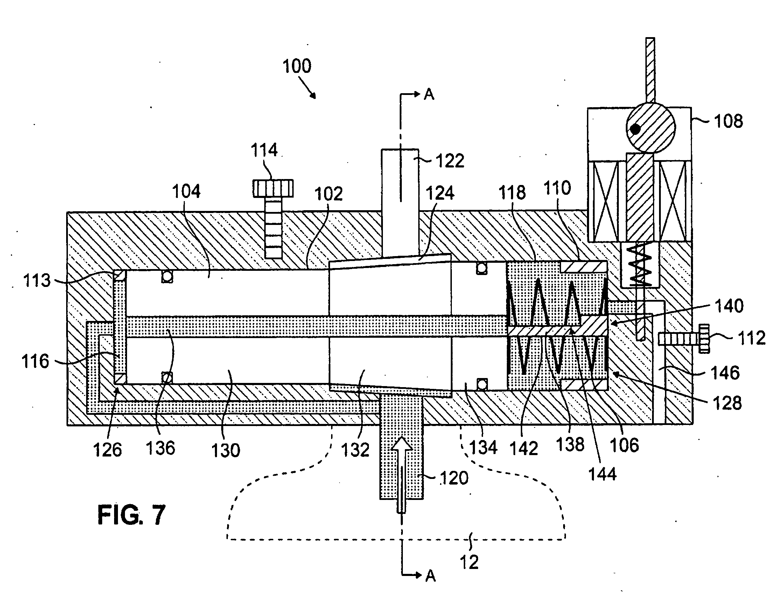

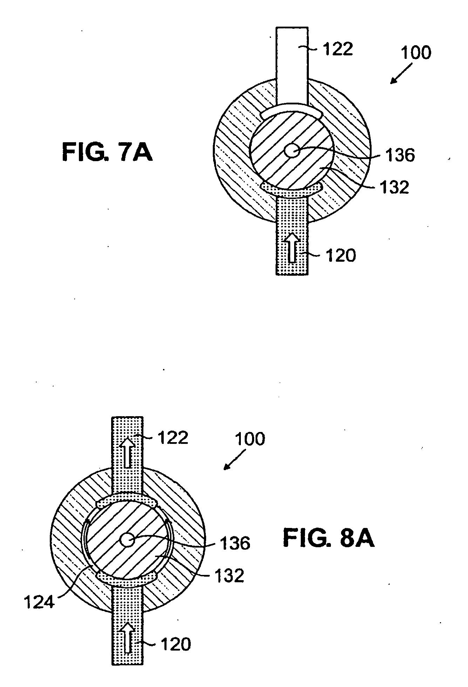

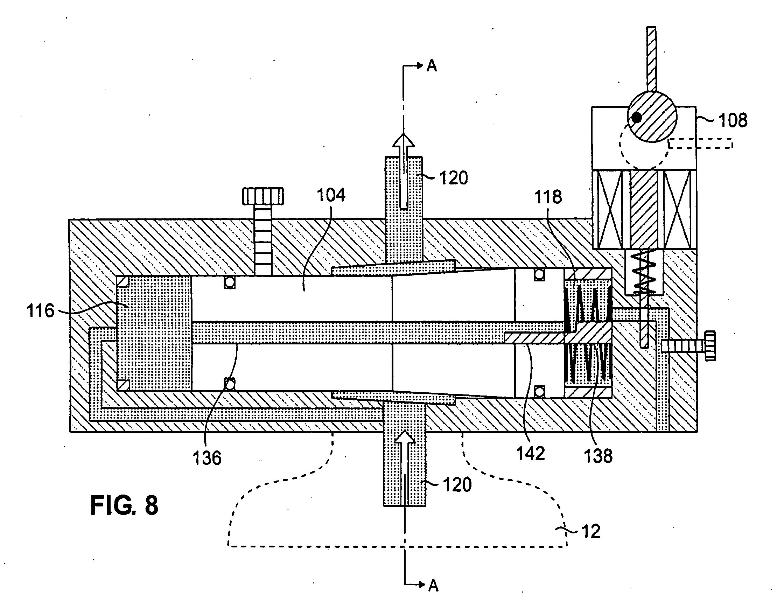

FIGS. 7 and 8 are sectional views of a second embodiment which is not part of the invention, of flow control valve 100 in a closed position and in an open position, respectively. Although flow control valve 100 is structurally different from flow control valve 16 (discussed in FIGS. 2-4), flow control valve 100 functions primarily in the same manner as flow control valve 16. FIG. 7 shows flow control valve 100 in the closed position mounted on cylinder 12. Flow control valve 100 generally includes valve body 102, slidable spool 104, first spring 106, second spring 108, solenoid valve 110, ring stop 112, damping screw 114, plug screw 116, and stop screw 118.

Valve body 102 generally comprises activation chamber 120, back pressure chamber 122, gas inlet 124, gas outlet 126, and primary flow passage 128. Spool 104 is sized to slidably engage valve body 102 between a first end 130 and a second end 132 of valve body 102. Spool 104 generally includes a head portion 134 comprised of a flange 136 along the circumference of head 134, a cylindrical mid-section 138, a tail portion 140 comprised of a flange 142 along the circumference of tail 140, and a piston 144.

Valve body 102 and spool 104 interact with each other in the same manner as flow control valve 16 except that the cross-section of primary flow passage 128 is controlled by piston 144. Piston rod 144 is attached to cylindrical section 138 at a first end 146 between flange 136 of head 134 and comprises a piston head 148 at a second end 152 sized to engage a conical valve seat 150 of valve body 102. When flow control valve 100 is closed, piston head 148 seals primary flow passage 128 located between activation chamber 120, gas inlet 124, and gas outlet 126. When primary flow passage 128 is sealed, gas cannot pass through gas inlet 124 to gas outlet 126.

FIG. 8 is a sectional view of flow control valve 100 in the open position. When there is a need to discharge gas from cylinder 12, solenoid valve 110 is opened and gas flows through a control flow passage 154 connecting cylinder 12 and activation chamber 120. As gas flows through control flow passage 154 and into activation chamber 120, the pressure in back pressure chamber 122 is gradually depleted through a bleed passage 156 connecting back pressure chamber 122 and cylinder 12. The combination of the spring restoring force of first spring 106 and the pneumatic pressure between activation and back pressure chambers 120 and 122 overcomes the frictional force on spool 104 and any residual pneumatic force, pushing spool 104 towards back pressure chamber 122 and ensuring that flow control valve 100 opens. As pressure in cylinder 12 decays exponentially as a result of gas release, spool 104 gradually moves to the second position as first spring 106 extends and second spring 108 relaxes until cylinder 12 pressure drops to zero.

The cross-section of primary flow passage 128 is a function of the displacement of spool 104 and piston head 148 of piston rod 144, and flow control valve 100 opens from a minimal to a maximal area linearly when the displacement of spool 104 is a linear function of time. The rate of gas discharge can also be controlled by setting damping screw 114 in control flow passage 154 and setting plug screw 116 in bleed passage 156. Damping screw 114 and plug screw 116 function in the same manner as plug screw 36 of flow control valve 16 (discussed in FIG 3).

Once flow control valve 100 has been completely discharged, flow control valve 100 is designed to be charged in the same manner as flow control valve 16 (discussed in FIG. 4).

The pneumatic flow control valve of the present invention controllably releases inert gas into an enclosed space upon detection of a fire or other hazard. The flow control valve has a spool housed in the valve body that is slidable from a first position to a second position. The slidable spool and the valve body form a control pressure chamber at one end of the valve bodyand a back pressure chamberat the opposite end of the valve body. The sliding spool is biased towards the first position by pressure applied by the back pressure chamber and a spring positioned in the back pressure chamber.

When the sliding spool is in the first position, a primary flow passage connecting the gas inlet and the gas outlet is fully closed. After a solenoid valve is actuated, pressure in the back pressure chamber is released, allowing gas to flow into the control pressure chamber. As a result, the spool gradually moves to the second position and graduallyopens the primary flow passage. This allows gas to pass from the cylinder through the flow control valve and into the enclosed room. The competing forces of the spring in the back pressure chamber, the pneumatic pressure of the control pressure chamber and the back pressure chamber, and the friction between the spool and the valve body control the rate of movement of the spool and the rate of gas release into the enclosed room.

Although the present invention has been described with reference to preferred embodiments, workers skilled in the art will recognize that changes may be made in form and detail without departing from the scope of the invention.

## Claims

1. A controlled pressure release valve (16) for preventing overpressure in a protected area (14) upon delivery of gas, the valve comprising:
a valve body (24) having a gas inlet (42) for connection to a gas container (12) under pressure and a gas outlet (44) for delivering gas to.the protected area (14);
a slidable spool (26) housed in the valve body (24), the slidable spool having a first end and a second end and movable between a first position and a second position;
a primary flow passage (46) connecting the gas inlet (42) and the gas outlet (44), wherein a cross-sectional area of the primary flow passage (46) increases with lineal movement of the slidable spool (26);
a first chamber (38) located adjacent the first end of the slidable spool (26), the first chamber having a first gas pressure;
a second chamber (40) located adjacent the second end of the slidable spool (26), the second chamber applying a second gas pressure to the slidable spool (26) such that the second gas pressure biases the slidable spool toward the first position;
a spring (28) for biasing the slidable spool (26) in the first position;
a bleed passage (76) connected to the second chamber (40); and
a valve actuator (78) for actuating the valve by opening the bleed passage (76), wherein when the valve is actuated, the first and second chambers (38,40) are in communication with the gas inlet (42) and the slidable spool (26) is urged to the second position at a rate that is a function of a decreasing pneumatic gas pressure in at least one of the chambers (38,40); **characterised in that** the valve
further comprises an internal passage (70) through the slidable spool (26) and a needle valve (72) slidably engageable with the internal passage (70), wherein the internal passage (70) is a variable diameter internal passage and the needle valve (72) is a variable diameter needle valve, and wherein the variable diameter internal passage (70) creates the controlled pressure differential between the first chamber (38) and the second chamber (40) as the variable diameter needle valve (72) slidably engages the internal passage (70).

2. The valve of claim 1, wherein a velocity of the slidable spool (26) is controlled by a pneumatic pressure differential between the first gas pressure and the second gas pressure, and the spring (28).

3. The valve of claim 2, wherein the first chamber (38) has a first diameter and the second chamber (40) has a second diameter, the second diameter being greater than the first diameter.

4. The valve of claim 3, wherein the valve actuator (78) is a solenoid pilot valve.

5. The valve of claim 4, and further comprising a tapered valve seat (52) for closing the primary flow passage (46) when the slidable spool (26) is in the first position and for opening the primary flow passage as the slidable spool moves to the second position.

6. The valve of claim 5, wherein the slidable spool (26) further comprises a tapered body (56) for engaging the tapered valve seat (52) when the slidable spool is in the first position.

7. The valve of any preceding claim, and further comprising a control flow passage (74) connecting the gas inlet (42) and the first chamber (38).

8. The valve of any preceding claim, and further comprising a protrusion (86) engageable with the bleed passage (76) for controlling gas pressure release from the second chamber (40) through the bleed passage.

9. The valve of claim 5, wherein the primary flow passage (46) opens from a minimal to a maximal area linearly as the slidable spool (26) is displaced linearly as a function of time.

## Patentansprüche

1. Geregeltes Druckentlastungsventil (16) zum Verhindern eines Überdrucks in einem geschützten Bereich (14) bei Abgabe von Gas, wobei das Ventil Folgendes umfasst:
- einen Ventilkörper (24), der einen Gaseinlass (42) zum Anschluss an einen Gasbehälter (12) unter Druck und einen Gasauslass (44) zum Abgeben von Gas an den geschützten Bereich (14) aufweist;
- eine verschiebbare Spule (26), die in dem Ventilkörper (24) untergebracht ist, wobei die verschiebbare Spule ein erstes Ende und ein zweites Ende aufweist und zwischen einer ersten Position und einer zweiten Position bewegbar ist;
- einen primären Strömungskanal (46), der den Gaseinlass (42) und den Gasauslass (44) verbindet, wobei eine Querschnittsfläche des primären Strömungskanals (46) mit der linearen Bewegung der verschiebbaren Spule (26) zunimmt;
- eine erste Kammer (38), die sich neben dem ersten Ende der verschiebbaren Spule (26) befindet, wobei die erste Kammer einen ersten Gasdruck aufweist;
- eine zweite Kammer (40), die sich neben dem zweiten Ende der verschiebbaren Spule (26) befindet, wobei die zweite Kammer einen zweiten Gasdruck auf die verschiebbare Spule (26) ausübt, so dass der zweite Gasdruck die verschiebbare Spule in Richtung auf die erste Position vorbelastet;
- eine Feder (28) zum Vorbelasten der verschiebbaren Spule (26) in die erste Position;
- einen Ablaufkanal (76), der an die zweite Kammer (40) angeschlossen ist; und
- ein Ventilstellglied (78) zum Betätigen des Ventils durch Öffnen des Ablaufkanals (76), wobei, wenn das Ventil betätigt wird, die ersten und zweiten Kammern (38, 40) mit dem Gaseinlass (42) in Verbindung stehen und die verschiebbare Spule (26) mit einer Geschwindigkeit, die eine Funktion eines abnehmenden Luftgasdrucks in mindestens einer der Kammern (38, 40) ist, in die zweite Position gedrängt wird;
**dadurch gekennzeichnet, dass** das Ventil ferner einen internen Kanal (70) durch die verschiebbare Spule (26) hindurch und ein Nadelventil (72), das verschiebbar mit dem internen Kanal (70) in Eingriff gebracht werden kann, umfasst, wobei der interne Kanal (70) ein interner Kanal mit variablem Durchmesser ist und das Nadelventil (72) ein Nadelventil mit variablem Durchmesser ist, und wobei der interne Kanal (70) mit variablem Durchmesser den geregelten Druckunterschied zwischen der ersten Kammer (38) und der zweiten Kammer (40) erstellt, während das Nadelventil (72) mit variablem Durchmesser verschiebbar mit dem internen Kanal (70) in Eingriff kommt.

2. Ventil nach Anspruch 1, wobei eine Geschwindigkeit der verschiebbaren Spule (26) durch einen Luftdruckunterschied zwischen dem ersten Gasdruck und dem zweiten Gasdruck und durch die Feder (28) geregelt wird.

3. Ventil nach Anspruch 2, wobei die erste Kammer (38) einen ersten Durchmesser und die zweite Kammer (40) einen zweiten Durchmesser aufweist, wobei der zweite Durchmesser größer als der erste Durchmesser ist.

4. Ventil nach Anspruch 3, wobei das Ventilstellglied (78) ein Magnetvorsteuerventil ist.

5. Ventil nach Anspruch 4, und ferner umfassend einen kegelförmigen Ventilsitz (52) zum Schließen des primären Strömungskanals (46), wenn sich die verschiebbare Spule (26) in der ersten Position befindet, und zum Öffnen des primären Strömungskanals, wenn sich die verschiebbare Spule in die zweite Position begibt.

6. Ventil nach Anspruch 5, wobei die verschiebbare Spule (26) ferner einen kegelförmigen Körper (56) umfasst, um mit dem kegelförmigen Ventilsitz (52) in Eingriff zu kommen, wenn sich die verschiebbare Spule in der ersten Position befindet.

7. Ventil nach einem der vorhergehenden Ansprüche und ferner umfassend einen Regelströmungskanal (74), der den Gaseinlass (42) und die erste Kammer (38) verbindet.

8. Ventil nach einem der vorhergehenden Ansprüche und ferner umfassend einen Vorsprung (86), der mit dem Ablaufkanal (76) in Eingriff gebracht werden kann, um die Gasdruckentlastung aus der zweiten Kammer (40) durch den Ablaufkanal hindurch zu regeln.

9. Ventil nach Anspruch 5, wobei sich der primäre Strömungskanal (46) von einer minimalen auf eine maximale Fläche linear öffnet, wenn die verschiebbare Spule (26) als Funktion der Zeit linear verschoben wird.

## Revendications

1. Soupape (16) de libération de pression contrôlée permettant d'éviter les surpressions dans une zone protégée (14) lors de la fourniture de gaz, la soupape comprenant :
un corps (24) de soupape possédant une admission (42) de gaz pour le raccordement à un réservoir (12) de gaz sous pression et une sortie (44) de gaz permettant d'alimenter la zone protégée (14) en gaz ;
une bobine coulissante (26) logée dans le corps (24) de soupape, la bobine coulissante possédant une première extrémité et une deuxième extrémité et pouvant être déplacée entre une première position et une deuxième position ;
un passage (46) d'écoulement principal permettant de raccorder l'admission (42) de gaz et la sortie (44) de gaz, où une zone transversale du passage (46) d'écoulement principal augmente avec le mouvement linéaire de la bobine coulissante (26) ;
une première chambre (38) située de manière adjacente à la première extrémité de la bobine coulissante (26), la première chambre présentant une première pression de gaz ;
une deuxième chambre (40) située de manière adjacente à la deuxième extrémité de la bobine coulissante (26), la deuxième chambre appliquant une deuxième pression de gaz à la bobine coulissante (26) de sorte que la deuxième pression de gaz décale la bobine coulissante vers la première position ;
un ressort (28) permettant de décaler la bobine coulissante (26) dans la première position ;
un passage (76) de purge raccordé à la deuxième chambre (40) ; et
un actionneur (78) de soupape permettant d'actionner la soupape en ouvrant le passage (76) de purge, où, lorsque la soupape est actionnée, les première et deuxième chambres (38, 40) sont en communication avec l'admission (42) de gaz, et la bobine coulissante (26) est poussée jusqu'à la deuxième position à une vitesse qui est fonction d'une pression de gaz pneumatique en diminution dans au moins l'une des chambres (38, 40) ; **caractérisé en ce que** la soupape
comprend en outre un passage interne (70) à travers la bobine coulissante (26) et une soupape (72) à pointeau pouvant entrer en prise de manière coulissante avec le passage interne (70), où le passage interne (70) est un passage interne de diamètre variable et la soupape (72) à pointeau est une soupape à pointeau de diamètre variable, et où le passage interne (70) de diamètre variable crée le différentiel de pression contrôlée entre la première chambre (38) et la deuxième chambre (40) tandis que la soupape (72) à pointeau de diamètre variable entre en prise de manière coulissante avec le passage interne (70).

2. Soupape selon la revendication 1, où une vitesse de la bobine coulissante (26) est contrôlée par un différentiel de pression pneumatique entre la première pression de gaz et la deuxième pression de gaz, et le ressort (28).

3. Soupape selon la revendication 2, où la première chambre (38) possède un premier diamètre et la deuxième chambre (40) possède un deuxième diamètre, le deuxième diamètre étant supérieur au premier diamètre.

4. Soupape selon la revendication 3, où l'actionneur (78) de soupape est une soupape pilote solénoïde.

5. Soupape selon la revendication 4, et comprenant en outre un siège (52) de soupape conique permettant de fermer le passage (46) d'écoulement principal lorsque la bobine coulissante (26) se trouve dans la première position et permettant d'ouvrir le passage d'écoulement principal tandis que la bobine coulissante se déplace jusqu'à la deuxième position.

6. Soupape selon la revendication 5, où la bobine coulissante (26) comprend en outre un corps conique (56) permettant de mettre en prise le siège (52) de soupape conique lorsque la bobine coulissante se trouve dans la première position.

7. Soupape selon l'une des revendications précédentes, et comprenant en outre un passage (74) d'écoulement de contrôle raccordant l'admission (42) de gaz et la première chambre (38).

8. Soupape selon l'une des revendications précédentes, et comprenant en outre une saillie (86) pouvant entrer en prise avec le passage (76) de purge, permettant de contrôler la libération de pression de gaz depuis la deuxième chambre (40) à travers le passage de purge.

9. Soupape selon la revendication 5, où le passage (46) d'écoulement principal s'ouvre d'une zone minimale à une zone maximale de manière linéaire tandis que la bobine coulissante (26) est déplacée de manière linéaire en fonction du temps.
